# EUROPÄISCHE PATENTSCHRIFT

(11) **EP 2 497 988 B1**
(45) Veröffentlichungstag und Bekanntmachung des Hinweises auf die Patenterteilung: **12.07.2017**
(21) Anmeldenummer: 12158721.6
(22) Anmeldetag: 09.03.2012
(51) Int. Cl.: F16L 27/12, F16L 59/08, F16L 59/16, F16L 59/21

(54) **Isolationskassette zur thermischen Isolierung langgestreckter Elemente**
Insulation cassette for thermal insulation of elongated elements
Cassette d'isolation destinée à l'isolation thermique d'éléments allongés

(30) Priorität: 10.03.2011 DE 102011001208; 16.03.2011 DE 102011001335
(43) Veröffentlichungstag der Anmeldung: 12.09.2012
(73) Patentinhaber: KAEFER Isoliertechnik GmbH & Co. KG, 28195 Bremen (DE)
(72) Erfinder: Fahrenholz, Peter, 28325 Bremen (DE); Blocksdorff, Rainer, 27721 Ritterhude (DE); Chrobok, Michael, 28327 Bremen (DE); Nowakowski, Peter, 28719 Bremen (DE); Ahlers, Günther, 28199 Bremen (DE)
(74) Vertreter: Tappe, Udo

(56) Entgegenhaltungen:
- EP-A1- 0 033 487
- EP-A1- 0 155 148
- DE-A1- 2 361 036
- DE-A1- 2 521 136
- DE-A1- 3 636 341

## Beschreibung

Die Erfindung betrifft eine Isolationskassette zur thermischen Isolierung langgestreckter Elemente mit einer mehrlagigen Isolation aus flächigen Reflexionselementen, wobei jede Lage der Isolation mindestens zwei flächige Reflexionselemente aufweist, die an ihren einander zugewandten Enden mindestens teilweise überlappen, mehrere Schiebeführungen sind in einem Überlappungsbereich zwischen einem ersten Kassettenteil und einem zweiten Kassettenteil angeordnet, und die Schiebeführungen weisen ein Langloch auf, in dem ein Bolzen verschiebbar geführt ist.

Eine derartige Isolationskassette ist aus der DE 25 21 136 A1 bekannt. Hierbei erstreckt sich der Bolzen durch die inneren und äußeren Begrenzungsbleche und alle Reflexionsbleche der Kassettenteile.

Der US 4,659,601 A ist gemäß der Beschreibungseinleitung zum Stand der Technik ebenfalls eine Isolationskassette gemäß, bei der ein Bolzen sämtliche Schichten der Isolationskassette durchdringt. Hierbei ist von Nachteil, dass durch die Durchführung des Bolzens von der Innenseite der Isolierkassette durch sämtliche Isolierlagen bis zur Außenseite eine Wärmebrücke gebildet wird.

Aus der EP 0 033 487 A1 ist eine Isolationskassette zur thermischen Isolierung langgestreckter Elemente mit einer mehrlagigen Isolation aus flächigen Reflexionselementen bekannt, wobei jede Lage der Isolation mindestens zwei flächige Reflexionselemente aufweist, die an ihren einander zugewandten Enden mindestens teilweise überlappen.

Isolationskassetten, die auch als Reflexionsmetallisolierung oder Ganzmetallisolierung bezeichnet werden, finden Verwendung zur thermischen Isolierung von Rohrleitungen. Insbesondere werden derartige Isolationskassetten zur Isolierung von Kühlwasserrohren von Kernkraftwerken verwendet. Wegen der mehrlagigen Anordnung der flächigen Reflexionselemente aus Reflexionsmetallfolien ergibt sich insbesondere bei hohen Temperaturen eine gute Isolierwirkung. Typische Arbeitsbereiche für derartige Isolationskassetten bei Kernkraftwerken sind Temperaturbereiche bis etwa 350° Celsius.

Wegen der verhältnismäßig großen Temperaturgradienten und der Ganzmetallausführung der Isolierung ergibt sich jedoch ein nicht unerhebliches Problem durch thermische Längenausdehnung. Darüber hinaus können die Isolationskassetten nur bis zu einem bestimmten Maß passgenau vorgefertigt werden, so dass vor Ort bei der Montage Passstücke zum Anpassen an die tatsächlich benötigten Längen auf Maß gefertigt werden müssen. Es werden deshalb beispielsweise zum Ausgleich der thermischen Längenausdehnung Isolierkassetten in Stufenfalzanordnung verwendet, um eine erforderliche Längenausdehnung zu ermöglichen. Problem bei diesen Stufenfalzkassetten ist allerdings, dass mitunter offene Spalte auftreten. Diese Spalte sind störanfällig und verschlechtern zudem die Isolierung.

Das der Erfindung zugrunde liegende Problem ist es deshalb, eine Isolationskassette anzugeben, mit der sich ohne eine Verschlechterung der Isolierwirkung Längenanpassungen vornehmen lassen.

Das Problem wird dadurch gelöst, dass bei einer Isolationskassette der vorstehend genannten Art der Bolzen fest mit der Umhüllung des zweiten Kassettenteils verbunden ist und sich durch das dem ersten Kassettenteil zugeordnete Langloch erstreckt, wobei sich der Bolzen ausgehend von der Umhüllung des zweiten Kassettenteils nach außen durch das dem ersten Kassettenteil zugeordnete Langloch erstreckt, und das Langloch der Umhüllung des ersten Kassettenteils zugeordnet ist. Auf diese Weise kann bei der Erfindung im Bereich der Überlappung ein Verschieben der flächigen Reflexionselemente einer Lage zueinander erfolgen, ohne dass sich ein Spalt auftun kann. Es ist somit im Bereich der Überlappung eine Längenanpassung als Kompensation für thermische Längenausdehnung des Materials oder zum Bereitstellen der gewünschten Länge als Passstück möglich, ohne dass sich durch Auftun von Spalten die Isoliereigenschaften der Isolationskassette verschlechtert.

Eine Weiterbildung der Erfindung zeichnet sich dadurch aus, dass die flächigen Reflexionselemente Metallfolien, vorzugsweise aus rostfreiem Stahl, VA-Stahl, insbesondere Austenit-Stahl, sind. Derartige Metallfolien haben gute Reflexionseigenschaften für Strahlung. Darüber hinaus ist rostfreier Stahl, VA-Stahl, insbesondere Austenit-Stahl, korrosionsbeständig und widerstandsfähig und hat darüber hinaus eine schlechte Wärmeleitfähigkeit, was die Isolationseigenschaften verbessert. Bei geringeren Anforderungen an das Material ist aber auch die Verwendung von Aluminiumfolie möglich.

Bei einer bevorzugten Ausführungsform der Erfindung sind die flächigen Reflexionselemente konzentrisch angeordnet, insbesondere mit einem radialen Abstand von 4 bis 15 mm, vorzugsweise von 6 bis 10 mm. Diese konzentrische Anordnung ermöglicht eine Vielzahl von Lagen der flächigen Reflexionselemente um ein zu isolierendes Bauteil, insbesondere eine Rohrleitung. Durch Einhalten von gleichmäßigen Abständen der Reflexionselemente zueinander ergibt sich eine homogene Isolationswirkung.

Eine andere Ausführungsform der Erfindung ist dadurch gekennzeichnet, dass die flächigen Reflexionselemente Abstandshalter aufweisen, vorzugsweise Noppen, die insbesondere beidseitig der Reflexionselemente, bevorzugt mittels kontrollierten Verformens der Reflexionselemente, hergestellt sind. Diese Abstandshalter, insbesondere Noppen, ermöglichen ein gleichmäßiges Einstellen des Abstandes der Reflexionselemente zueinander. Gleichzeitig treten einander benachbarte Reflexionselemente nur punktuell im Bereich der Abstandshalter miteinander in Kontakt, so dass hier, bezogen auf die Fläche, keine nennenswerte Verschlechterung der Isolationswirkung auftritt.

Es ist dabei von Vorteil, wenn die Reflexionselemente mit Abstandshalter abwechselnd mit Reflexionselementen ohne Abstandshalter jeweils abwechselnd aufeinander folgend angeordnet sind. Dadurch ergibt sich ein einfacher Aufbau und eine einfache Montage, da die einander benachbarten Reflexionselemente jeweils gegeneinander zur Montage verschoben werden können. Außerdem können bei der Montage keine Probleme durch Verhaken der Abstandshalter zweier benachbarter flächiger Reflexionselemente auftreten.

Eine andere Ausführungsform der Erfindung zeichnet sich dadurch aus, dass eine Außenhülle vorgesehen ist, die mehrere Hüllenteile aufweist, wobei vorzugsweise axial und/oder tangential einander benachbarte Hüllenteile mittels einer Schiebeführung axial und/oder tangential gegeneinander verschiebbar sind. Auf diese Weise können diese axial und/oder tangential gegeneinander verschiebbaren Hüllenteile die ebenfalls axial und/oder tangential gegeneinander verschiebbaren flächigen Reflexionselemente einer jeden Lage abdecken und umhüllen, so dass diese gut gegen Beschädigung geschützt sind. Gleichzeitig wird durch diese Ausführungsform eine Längenanpassung nicht behindert. Die Schiebeführung kann ein Langloch und einen darin geführten Bolzen aufweisen. Eine derartige Schiebeführung ist einfach in der Herstellung und zuverlässig in der Anwendung.

Es ist auch möglich, dass die Hüllenteile Schnellverschlüsse, insbesondere Spannverschlüsse, zum Verbinden der Hüllenteile miteinander und/oder mit axial und/oder tangential benachbarten Isolationskassetten, aufweisen. Auf diese Weise kann ein zu isolierendes Element, beispielsweise eine Rohrleitung, schnell und einfach mit vorkonfektionierten Hüllenteilen eines Isolationssystems nachträglich mit einer Isolation versehen werden. Zudem ist zu Wartungs- und Reparaturzwecken an beliebiger Stelle jederzeit ein Öffnen und Wiederverschließen des Isolationssystems möglich.

Bei einer vorteilhaften Ausgestaltung der Erfindung weist der zweite Kassettenteil eine Aufnahme für eine Abzweigung eines Rohrsystems auf. Auf diese Weise ist eine Längenanpassung auch im Bereich von Abzweigungen einfach möglich.

Wenn der erste Kassettenteil und/oder der zweite Kassettenteil an seiner Umhüllung einen Überstand und/oder Falz zur Führung des jeweils anderen Kassettenteils aufweist, lässt sich eine einfache Montage und eine sichere Führung gegeneinander bei Längenänderungen erzielen. Es ist in diesem Fall von besonderem Vorteil, wenn der Überstand und/oder der Falz eine Höhe hat, die etwa der halben Führungslänge der Schiebeführung entspricht, insbesondere geringfügig größer ist. Auf diese Weise ist eine zuverlässige Führung der Kassettenteile zueinander bei der Montage oder bei Längenänderungen über die gesamte oder zumindest fast die gesamte Führungslänge der Schiebeführung gewährleistet.

Ein weiterer Vorteil der Erfindung betrifft die Verwendung einer erfindungsgemäßen Isolationskassette als Ausgleichselement zum Ausgleichen thermischer Längenänderungen und/oder als Passteil zur variablen Längenanpassung bei der Montage. Auf diese Weise kann einfach und ohne Verschlechterung der Isolation eine Längenanpassung bei Bedarf vorgenommen werden.

Ein anderer Vorteil der Erfindung ergibt sich bei der Verwendung einer erfindungsgemäßen Isolationskassette zur Isolierung von Rohrleitungen, insbesondere von Kühlwasserrohren von Kernkraftwerken, vorzugsweise im Bereich von Abzweigungen. Hierbei ergibt sich eine stabile und durable Isolierung mit hoher Lebensdauer, guten Isoliereigenschaften und guter Anpassungsfähigkeit an Längenänderungen.

Nachfolgend wird ein Ausführungsbeispiel der Erfindung anhand der Zeichnungen näher beschrieben. Es zeigen:
- Fig. 1: ein Isoliersystem mit den Erfindungsmerkmalen in einer perspektivischen Darstellung,
- Fig. 2: den Schnitt A - A von Fig. 1,
- Fig. 3: eine Schiebeführung gemäß Detail z von Fig. 1,
- Fig. 4: eine Schnittdarstellung der Schiebeführung gemäß Detail y von Fig. 2,
- Fig. 5: eine schematische Darstellung der längenvariablen Isolierkassette von Fig. 1 mit voneinander abgenommenen Kassettenteilen,
- Fig. 6: eine Vorderansicht eines Kassettenteils von Fig. 5,
- Fig. 7: eine vergrößerte Teildarstellung des Kassettenteils von Fig. 6,
- Fig. 8: einen oberen Teil einer Isolierkassette in einer teilgeschnittenen perspektivischen Darstellung als ein weiteres Ausführungsbeispiel der Erfindung, und
- Fig. 9: einen unteren Teil der Isolierkassette in einer Darstellung ähnlich Fig. 8.

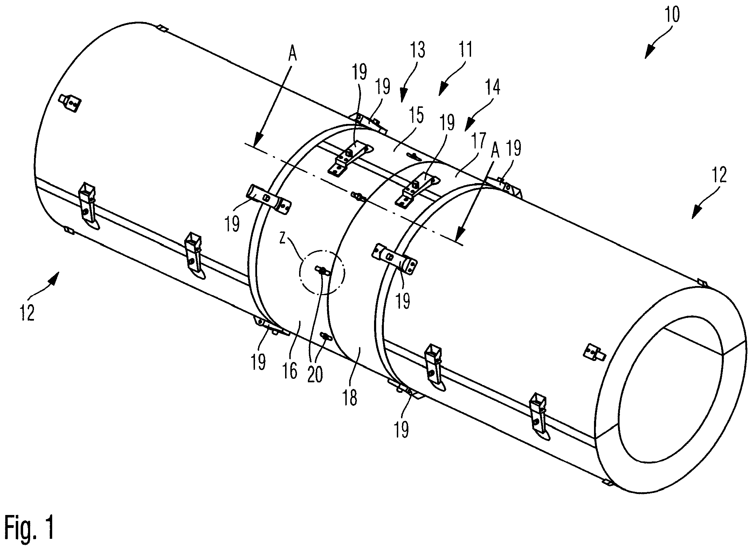

Fig. 1 zeigt ein Isoliersystem 10 in einer perspektivischen Darstellung als ein Ausführungsbeispiel der Erfindung. Wie sich der Figur entnehmen lässt, weist das Isoliersystem 10 eine Isolierkassette 11 auf, an die in Axialrichtung jeweils angrenzend je eine Isolierkassette 12 angeordnet ist. Die Isolierkassetten 12 sind bei dem gezeigten Ausführungsbeispiel bekannte Ganzmetallisolierkassetten, bei denen in einem Gehäuse jeweils eine mehrlagige Isolierung aus Reflexionsmetallfolien angeordnet ist.

Die Isolierkassette 11 hat bei dem gezeigten Ausführungsbeispiel einen ersten Kassettenteil 13 und einen zweiten Kassettenteil 14, die gegeneinander in Axialrichtung verschiebbar sind, wie nachfolgend noch näher erläutert wird.

Der erste Kassettenteil 13 hat bei dem gezeigten Ausführungsbeispiel zwei Kassettenteilelemente 15, 16, während der zweite Kassettenteil 14 auf ähnliche Weise zwei Kassettenteilelemente 17, 18 aufweist.

Die Kassettenteilelemente 15 und 16 bzw. 17 und 18 sind miteinander mit Schnellverschlüssen, im gezeigten Ausführungsbeispiel mit Spannverschlüssen 19, verbunden. Auf gleiche Weise sind die Kassettenteilelemente 15 bis 18 mit den angrenzenden Isolierkassetten 12 jeweils ebenfalls mit Schnellverschlüssen, nämlich mit Spannverschlüssen 19, verbunden.

Der Figur ist außerdem zu entnehmen, dass in einem Überlappungsbereich zwischen dem ersten Kassettenteil 13 und dem zweiten Kassettenteil 14 mehrere Schiebeführungen 20 angeordnet sind. In der Figur sind insgesamt vier Schiebeführungen zu sehen, von denen allerdings nur zwei Schiebeführungen 20 mit einem Bezugszeichen versehen sind.

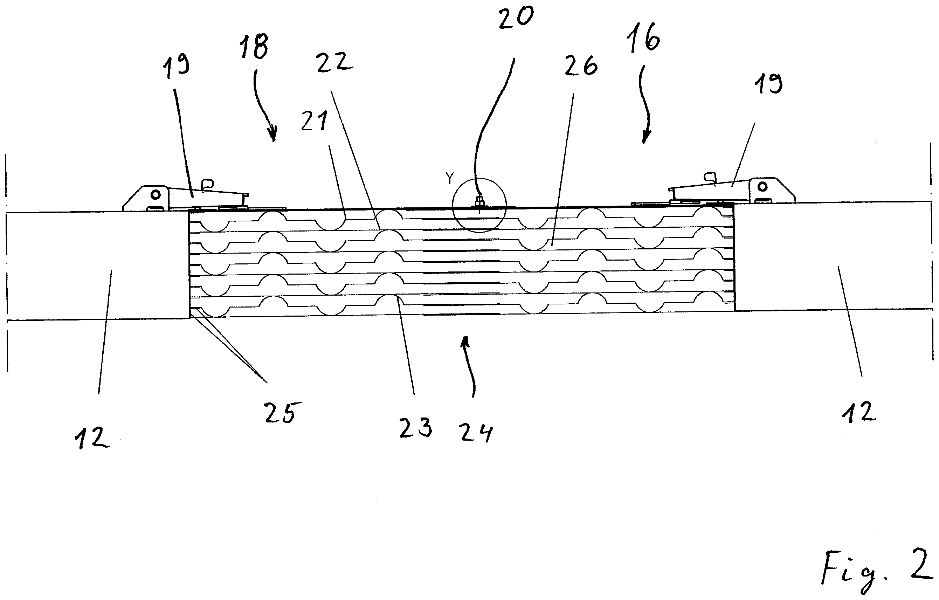

Fig. 2 zeigt den Schnitt A - A von Fig. 1. Wie sich der Figur entnehmen lässt, sind die Kassettenteilelemente 16, 18 jeweils ähnlich aus mehreren Lagen flächiger Reflexionselemente 21, 22 aufgebaut. Im Einzelnen sind die flächigen Reflexionselemente bei dem gezeigten Ausführungsbeispiel Metallfolien 21, 22, nämlich Edelstahlfolien. Dabei weisen die Metallfolien 21 eine Vielzahl wechselweise angeordneter Noppen 23 auf und sind somit als Noppenfolie 21 ausgeführt. Im Gegensatz dazu sind die Metallfolien 22 jeweils plan ausgeführt.

Bei dem gezeigten Ausführungsbeispiel sind die Noppenfolien 21 und die planen Folien 22 jeweils abwechselnd einander benachbart angeordnet. In einem Bereich 24 überlappen die Folien 21, 22 der Kassettenteilelemente 16, 18 jeweils miteinander. Wie sich der Figur weiter entnehmen lässt, sind die Folien 21, 22 an ihrem von dem Bereich 24 abgewandten Ende jeweils mit einer Hülle der Kassettenteilelemente 16, 18 mittels einer Vielzahl von Schweißpunkten 25 verschweißt, von denen in der Figur der besseren Übersichtlichkeit halber nur zwei Schweißpunkte 25 mit einem Bezugszeichen versehen sind.

Wie sich der Figur weiter entnehmen lässt, dienen die Noppen 23 zum Herstellen eines definierten Luftspaltes 26 zwischen einander benachbarten Metallfolien 21, 22.

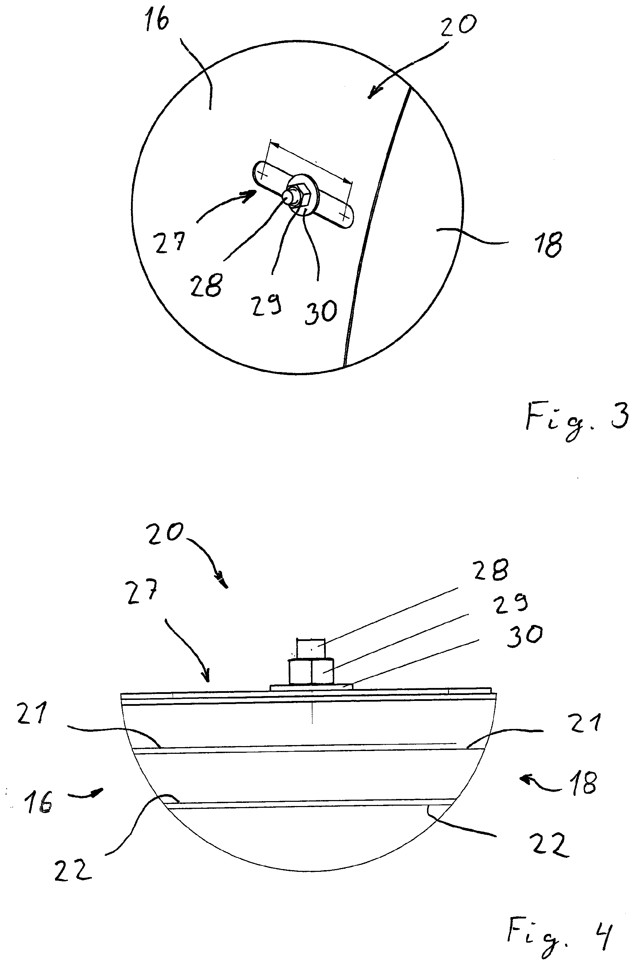

Fig. 3 zeigt eine Schiebeführung 20 gemäß Detail z von Fig. 1. Wie sich der Figur entnehmen lässt, weist die Schiebeführung 20 ein Langloch 27 auf, in dem ein Bolzen 28 verschiebbar geführt ist. Der Bolzen 28 ist bei dem gezeigten Ausführungsbeispiel ein Gewindebolzen 28, auf den eine Mutter 29 unter Unterlage einer Unterlegscheibe 30 aufgeschraubt ist.

Fig. 4 zeigt eine vergrößerte Teildarstellung im Bereich der Schiebeführung 20 gemäß Detail y von Fig. 2. Wie sich den Fig. 3 und 4 entnehmen lässt, ist der Bolzen 28 fest mit der Umhüllung des Kassettenteilelementes 18 verbunden und erstreckt sich durch das Langloch 27. Gegen ein Heraustreten aus dem Langloch 27 ist der Bolzen 28 mittels der Unterlegscheibe 30 und der Mutter 29 gesichert, wobei ein versehentliches Lösen der Mutter 29 von dem Gewindebolzen 28 durch einen Schweißpunkt an der Verbindungsstelle zwischen der Mutter 29 und dem Bolzen 28 zuverlässig verhindert werden kann. Der Verschiebebereich der maximalen Längenanpassung der Isolierkassette 11 durch Verschieben der Kassettenteilelemente 16, 18 gegeneinander wird durch die Länge des Langloches 27 begrenzt, wie in der Fig. 3 durch einen Doppelpfeil angedeutet.

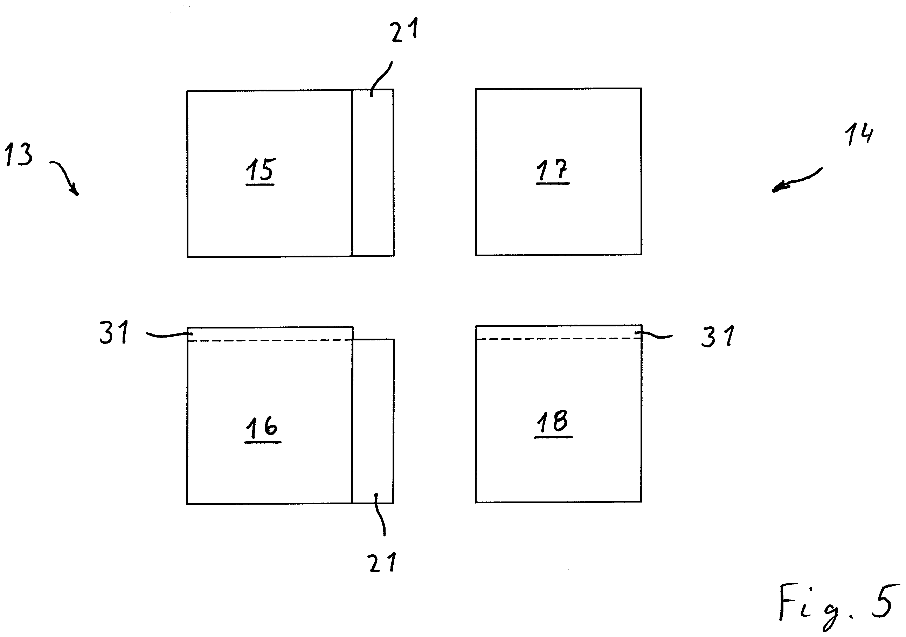

Fig. 5 zeigt in einer schematischen Explosionsdarstellung die Kassettenteilelemente 15, 16, 17, 18 in voneinander abgenommener Weise. Wie sich der Figur entnehmen lässt, treten die Noppenfolien 21 bei den Kassettenteilelementen 15, 16 aus der Umhüllung hervor. Auf diese Weise wird sichergestellt, dass beim Verschieben der Kassettenteilelemente 15, 16 gegen die Kassettenteilelemente 17, 18 kein Zustand erreicht wird, bei dem im Bereich 24 keine Überlappung einander benachbarter Folien mehr stattfindet. Außerdem ist durch das Vorstehen der Isolierfolien 21, 22 über die Kassettenteilelemente 15, 16 ein einfacheres Einschieben in die Kassettenteilelemente 17, 18 möglich. Wie sich der Figur außerdem entnehmen lässt, weisen die Kassettenteilelemente 16, 18 an ihren den Kassettenteilelementen 15, 17 jeweils zugewandten Enden Falze 31 auf, die im montierten Zustand als Führung für die Kassettenteilelemente 15, 17 dienen und zudem die Bildung eines Spaltes zwischen den Kassettenteilelementen 15, 17 und den Kassettenteilelementen 16, 18 jeweils verhindern.

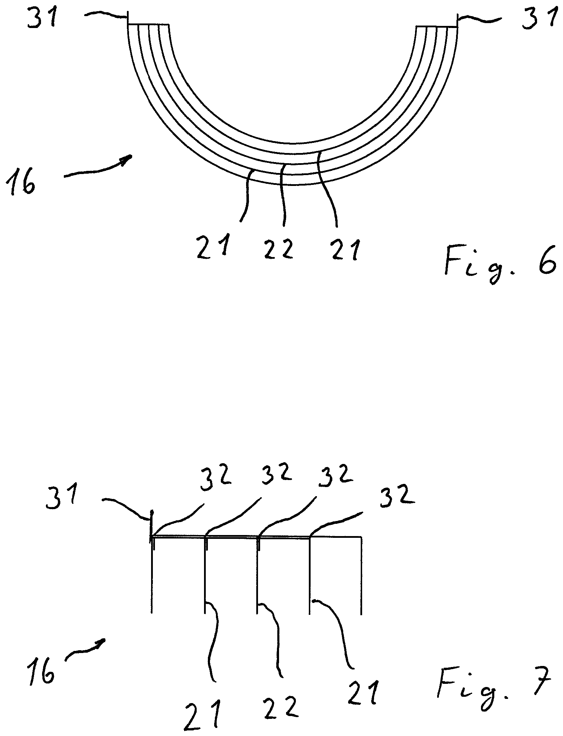

Fig. 6 zeigt eine Vorderansicht des Kassettenteilelementes 16. Zur besseren Übersichtlichkeit sind in der Figur nur drei Metallfolien 21, 22 dargestellt. Wie sich der Figur entnehmen lässt, sind Falze 31 an voneinander abgewandten Seiten des Kassettenteilelementes 16 vorgesehen. Bei der Montage kann ein dem Kassettenteilelement 16 zugeordnetes Kassettenteilelement 15 so einfach auf dem Kassettenteilelement 16 angeordnet werden und wird durch die Falze 31 zuverlässig und sicher bis zum Befestigen der Spannverschlüsse 19 gehalten und geführt. Es ist an dieser Stelle darauf hinzuweisen, dass für kleine Durchmesser der Isolierkassette 11 auf die Verwendung von Noppenfolie 21 verzichtet werden kann. In diesem Fall können auch mehrere Lagen konzentrisch angeordneter Metallfolien 22 allein verwendet werden, da dann die Eigensteifigkeit der Metallfolie 22 für das Einstellen eines definierten Lagenabstandes ausreicht.

Fig. 7 zeigt eine vergrößerte Teildarstellung des Verbindungsbereiches der Metallfolien 21, 22 mit der Umhüllung des Kassettenteilelementes 16. Wie sich der Figur entnehmen lässt, sind die Metallfolien 21, 22 am verbindungsseitigen Ende jeweils U-förmig umgebogen und mittels Schweißpunkten 32 mit der Umhüllung des Kassettenteilelementes 16 jeweils verbunden. Auf diese Weise dienen die U-förmig umgebogenen Enden der Metallfolien 21, 22 einerseits zu einer sicheren Befestigung und andererseits als Abstandselemente.

Nachfolgend wird die Wirkungsweise der Isolierkassette 11 anhand der Figuren erläutert. Wie sich beispielsweise Fig. 2 entnehmen lässt, sind in dem Bereich 24 die einzelnen Lagen der Metallfolien 21, 22 und der Umhüllung jeweils lagenweise überlappend ausgebildet. Bei einer Längenanpassung mit der Isolierkassette 11, beispielsweise zur Anpassung an die gewünschte Länge bei der Montage oder zum Ausgleich von thermischen Ausdehnungen, können die einzelnen Lagen der Metallfolien 21, 22 der Umhüllung so aufeinander gleiten. Die maximale Verstellung wird dabei durch die Führung des Bolzens 28 in dem Langloch 27 begrenzt. Mittels der Spannverschlüsse 19 ist die in dem Isoliersystem 10 angeordnete Rohrleitung dabei jederzeit zu Wartungs- oder Reparaturzwecken zugänglich.

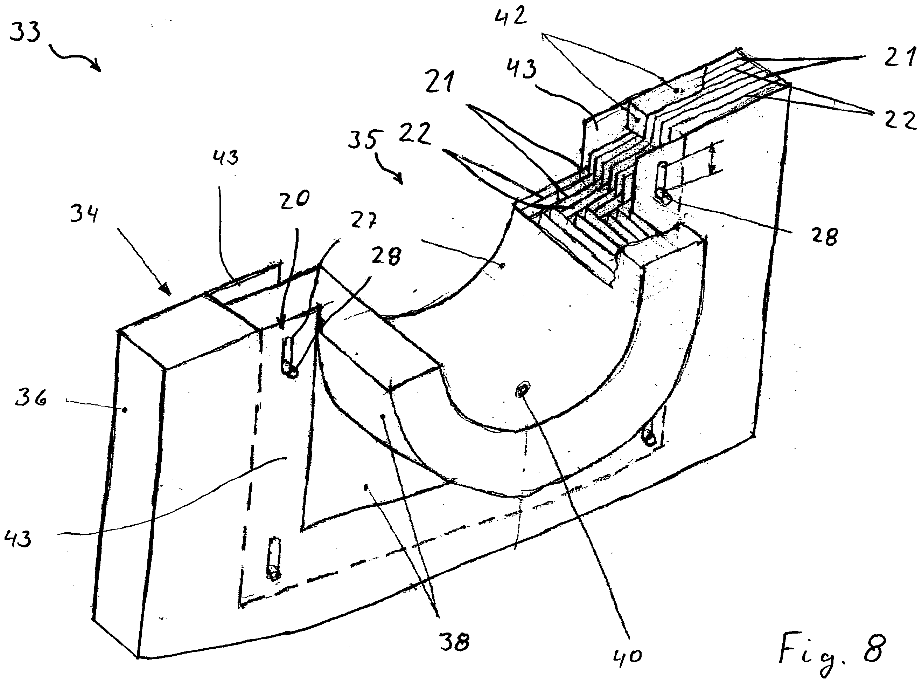

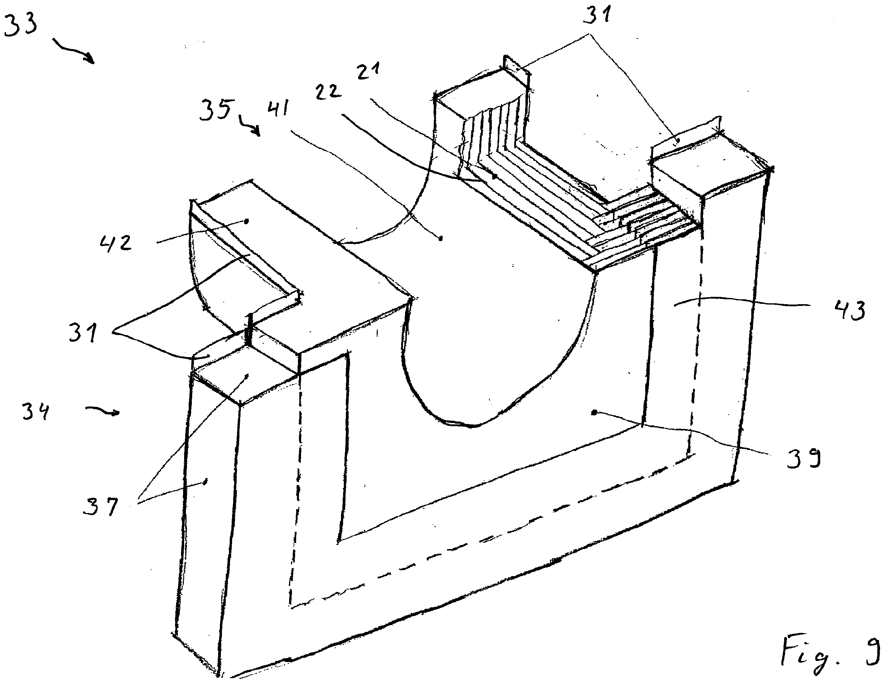

Fig. 8 zeigt einen oberen Teil einer Isolierkassette 33 in einer teilgeschnittenen perspektivischen Darstellung als ein weiteres Ausführungsbeispiel der Erfindung. Fig. 9 zeigt einen unteren Teil der Isolierkassette 33 in einer Darstellung ähnlich Fig. 8. Gleiche Elemente tragen die gleichen Bezugszeichen wie bei der Isolierkassette 11.

Wie sich den Figuren entnehmen lässt, weist die Isolierkassette 33 einen ersten Kassettenteil 34 und einen zweiten Kassettenteil 35 auf. Der Aufbau der Kassettenteile 34, 35 entspricht im Wesentlichen dem der Kassettenteile 13, 14. Dabei hat der erste Kassettenteil 34 zwei Kassettenelemente 36, 37 und der zweite Kassettenteil 35 hat zwei Kassettenelemente 38, 39. Die Kassettenelemente 38, 39 weisen jeweils Aufnahmen 40, 41 auf, die gemeinsam im montierten Zustand eine Aufnahme für eine Abzweigung einer Rohrleitung bilden.

Die Kassettenelemente 36, 37 weisen jeweils eine Umhüllung 42 auf, die die flächigen Reflexionselemente, nämlich die Metallfolien 21, 22 umhüllen. Darüber hinaus weisen die Kassettenelemente 36, 37 an die Umhüllung angrenzend und den Kassettenelementen 38, 39 benachbart jeweils Überstände 43 auf. Im Bereich der Überstände 43 sind Schiebeführungen 20 angeordnet, die die vorstehend bereits erläuterten Komponenten aufweisen und die vorstehend bereits erläuterte Funktionsweise haben. Zwischen den Kassettenelementen 37, 39 sind ebenfalls Schiebeführungen 20 angeordnet, die in der Fig. 9 jedoch nicht zu sehen sind. Weiter haben die Kassettenelemente 37, 39 noch den Kassettenelemente 36, 38 zugewandt und diesen im montierten Zustand benachbarte Falze 31.

Bei der Montage werden die beiden Teile der Isolationskassette 33 im Bereich einer Abzweigung derart aufeinander gesetzt, dass die Aufnahmen 40, 41 der Kassettenelemente 38, 39 gemeinsam eine Aufnahme zum Aufnehmen des abzweigenden Rohrteiles bilden. Dabei bilden die Falze 31 und die Überstände 43 jeweils eine Führung zum Erleichtern des Einführens des Kassettenelementes 39 in das Kassettenelement 36. Wegen der Schiebeführungen muss die Isolationskassette 33 nicht ganz exakt in ihren Abmessungen auf die Position der Abzweigung abgestimmt sein. Es ist vielmehr ausreichend, wenn die Maßhaltigkeit soweit gegeben ist, dass die Abweichungen im Bereich dessen liegen, was mit der Schiebeführung 20 ausgeglichen werden kann.

Im Betrieb durch Temperaturänderungen auftretende Änderungen der Länge des Hauptrohres oder Behälters, von dem ein Rohr abzweigt, lassen sich mit der Schiebeführung auf die vorstehend bereits erläuterte Weise kompensieren. Dabei können einander benachbarte Metallfolien 21, 22 im Bereich Ihrer Überlappung aufeinander gleiten, und so ebenfalls einen Längenausgleich gestatten, ohne dass Schwachstellen in der Isolierung entstehen.

### Bezugszeichenliste:

- 10: Isoliersystem
- 11: Isolierkassette
- 12: Isolierkassette
- 13: erster Kassettenteil
- 14: zweiter Kassettenteil
- 15: Kassettenteilelement
- 16: Kassettenteilelement
- 17: Kassettenteilelement
- 18: Kassettenteilelement
- 19: Spannverschluss
- 20: Schiebeführung
- 21: Noppenfolie
- 22: Folie
- 23: Noppe
- 24: Bereich
- 25: Schweißpunkt
- 26: Luftspalt
- 27: Langloch
- 28: Bolzen
- 29: Mutter
- 30: Unterlegscheibe
- 31: Falz
- 32: Schweißpunkt
- 33: Isolierkassette
- 34: erster Kassettenteil
- 35: zweiter Kassettenteil
- 36: Kassettenelement
- 37: Kassettenelement
- 38: Kassettenelement
- 39: Kassettenelement
- 40: Aufnahme
- 41: Aufnahme
- 42: Überstand

## Patentansprüche

1. Isolationskassette zur thermischen Isolierung langgestreckter Elemente mit einer mehrlagigen Isolation aus flächigen Reflexionselementen (21, 22), wobei jede Lage der Isolation mindestens zwei flächige Reflexionselemente (21, 22) aufweist, die an ihren einander zugewandten Enden (24) mindestens teilweise überlappen, wobei mehrere Schiebeführungen (20) in einem Überlappungsbereich zwischen einem ersten Kassettenteil (13, 34) und einem zweiten Kassettenteil (14, 35) angeordnet sind, und wobei die Schiebeführungen (20) ein Langloch (27) aufweisen, in dem ein Bolzen (28) verschiebbar geführt ist, **dadurch gekennzeichnet, dass** der Bolzen (28) fest mit der Umhüllung des zweiten Kassettenteils (14, 35) verbunden ist und sich durch das dem ersten Kassettenteil (13, 34) zugeordnete Langloch (27) erstreckt, **dadurch gekennzeichnet, dass** sich der Bolzen (28) ausgehend von der Umhüllung des zweiten Kassettenteils (14, 35) nach außen durch das dem ersten Kassettenteil (13, 34) zugeordnete Langloch (27) erstreckt, und das Langloch (27) der Umhüllung des ersten Kassettenteils (13, 34) zugeordnet ist.

2. Isolationskassette nach Anspruch 1, **dadurch gekennzeichnet, dass** die flächigen Reflexionselemente Metallfolien (21 22), vorzugsweise aus rostfreiem Stahl, VA-Stahl, insbesondere Austenit-Stahl, sind.

3. Isolationskassette nach Anspruch 1 oder 2, **dadurch gekennzeichnet, dass** die flächigen Reflexionselemente (21,22) konzentrisch angeordnet sind, insbesondere mit einem radialen Abstand (26) von 4 bis 15 mm, vorzugsweise von 6 bis 10 mm.

4. Isolationskassette nach einem der vorhergehenden Ansprüche, **dadurch gekennzeichnet, dass** die flächigen Reflexionselemente (21) Abstandshalter aufweisen, vorzugsweise Noppen (23), die insbesondere beidseitig der Reflexionselemente (21), bevorzugt mittels kontrolliertem Verformen der Reflexionselemente (21), hergestellt sind.

5. Isolationskassette nach Anspruch 4, **dadurch gekennzeichnet, dass** Reflexionselemente (21) mit Abstandshalter (23) und Reflexionselemente (22) ohne Abstandshalter (23) jeweils abwechselnd angeordnet sind.

6. Isolationskassette nach einem der vorhergehenden Ansprüche, **dadurch gekennzeichnet, dass** eine Außenhülle vorgesehen ist, die mehrere Hüllenteile (15-18, 36-39) aufweist, wobei vorzugsweise axial und/oder tangential einander benachbarte Hüllenteile (15-18, 36-39) mittels der Schiebeführung (20) axial und/oder tangential gegeneinander verschiebbar sind.

7. Isolationskassette nach Anspruch 6, **dadurch gekennzeichnet, dass** die Hüllenteile (15-18, 36-39) Schnellverschlüsse, insbesondere Spannverschlüsse (19), zum Verbinden der Hüllenteile (15-18, 36-39) miteinander und/oder mit axial und/oder tangential benachbarten Isolationskassetten (12) aufweisen.

8. Isolationskassette nach einem der vorhergehenden Ansprüche, **dadurch gekennzeichnet, dass** der zweite Kassettenteil eine Aufnahme (40, 41) für eine Abzweigung eines Rohrsystems aufweist.

9. Isolationskassette nach einem der vorhergehenden Ansprüche, **dadurch gekennzeichnet, dass** der erste Kassettenteil (13, 34) und/oder der zweite Kassettenteil (14, 35) an seiner Außenhülle (42) einen Überstand (43) und/oder einen Falz (31) zur Führung des jeweils anderen Kassettenteils aufweist.

10. Isolationskassette nach Anspruch 9, **dadurch gekennzeichnet, dass** der Überstand (43) und/oder der Falz (31) eine Höhe hat, die etwa der halben Führungslänge der Schiebeführung (20) entspricht, insbesondere geringfügig größer ist.

11. Verwendung einer Isolationskassette (11, 33) nach einem der vorhergehenden Ansprüche als Ausgleichselement zum Ausgleichen thermischer Längenänderungen und/oder als Passteil zur variablen Längenanpassung bei der Montage.

12. Verwendung einer Isolationskassette (11, 33) nach einem der Ansprüche 1 bis 10 zur Isolierung von Rohrleitungen, insbesondere von Kühlwasserrohren von Kernkraftwerken, vorzugsweise im Bereich von Abzweigungen.

## Claims

1. Insulation cassette for the thermal insulation of elongated elements with a multilayer insulation made of flat reflection elements (21, 22), wherein each layer of the insulation has at least two flat reflection elements (21, 22) that overlap at least partly at their ends (24) that face each other, wherein a plurality of pushing guides (20) are arranged in an overlapping area between a first cassette part (13, 34) and a second cassette part (14, 35), and wherein the pushing guides (20) have an elongated hole (27), in which a bolt (28) is moveably guided, **characterised in that** the bolt (28) is rigidly connected to the shell of the second cassette part (14, 35) and extends through the elongated hole (27) associated with the first cassette part (13, 34), **characterised in that** the bolt (28), starting from the shell of the second cassette part (14, 35), extends outwards through the elongated hole (27) associated with the first cassette part (13, 34), and the elongated hole (27) is associated with the shell of the first cassette part (13, 34).

2. Insulation cassette according to claim 1, **characterised in that** the flat reflection elements are metal foils (21, 22), preferably made of stainless steel, VA steel, in particular austenitic steel.

3. Insulation cassette according to claim 1 or 2, **characterised in that** the flat reflection elements (21, 22) are arranged concentrically, in particular with a radial distance of 4 mm to 15 mm, preferably 6 mm to 10 mm.

4. Insulation cassette according to one of the preceding claims, **characterised in that** the flat reflection elements (21) have spacers, preferably knobs (23), which are produced in particular on both sides of the reflection elements (21), preferably by means of controlled deformation of the reflection elements (21).

5. Insulation cassette according to claim 4, **characterised in that** reflection elements (21) with spacers (23) and reflection elements (22) without spacers (23) are alternately arranged.

6. Insulation cassette according to one of the preceding claims, **characterised in that** an outer shell is provided, which has a plurality of shell parts (15-18, 36-39), wherein preferably the axially and/or tangentially adjacent shell parts (15-18, 36-39) can be axially and/or tangentially displaced against one another by means of a pushing guide (20).

7. Insulation cassette according to claim 6, **characterised in that** the outer shell parts (15-18, 36-39) have quick-release fasteners, in particular toggle-type fasteners (19), to connect the outer shell parts (15-18, 36-39) together and/or to axially and/or tangentially adjacent insulation cassettes (12).

8. Insulation cassette according to one of the preceding claims, **characterised in that** the second cassette part has a receiving part (40, 41) for a branch connection of a pipe system.

9. Insulation cassette according to one of the preceding claims, **characterised in that** the first cassette part (13, 34) and/or the second cassette part (14, 35) has a projection (43) and/or a fold (31) on its outer shell (42) for guiding the respective other cassette part.

10. Insulation cassette according to claim 9, **characterised in that** the height of the projection (43) and/or the fold (31) corresponds to about half the guide length of the pushing guide (20) and in particular is slightly greater.

11. Use of an insulation cassette (11, 33) according to one of the preceding claims as a compensating element for compensating longitudinal thermal changes and/or as an adapter for variable length adjustment during assembly.

12. Use of an insulation cassette (11, 33) according to one of claims 1 to 10 for insulating pipe lines, in particular cooling water pipes of nuclear power plants, preferably in the area of branching connections.

## Revendications

1. Cassette d'isolation pour l'isolation thermique d'éléments allongés avec une isolation multi-couches constituée d'éléments de réflexion plats (21, 22), chaque couche de l'isolation comprenant au moins deux éléments de réflexion plats (21, 22), qui se superposent au moins partiellement au niveau de leurs extrémités (24) orientées l'une vers l'autre, plusieurs guidages coulissants (20) étant disposés dans une zone de superposition entre une première partie de cassette (13, 34) et une deuxième partie de cassette (14, 35) et les guidages coulissants (20) présentant un trou oblong (27) dans lequel une tige (28) est guidée de manière coulissante, **caractérisée en ce que** la tige (28) est reliée solidement à l'enveloppe de la deuxième partie de la cassette (14, 35) et s'étend à travers le trou oblong (27) correspondant à la première partie de la cassette (13, 34), **caractérisée en ce que** la tige (28) s'étend de l'enveloppe de la deuxième partie de la cassette (14, 35) vers l'extérieur à travers le trou oblong (27) correspondant à la première partie de la cassette (13, 34) et le trou oblong (27) correspond à l'enveloppe de la première partie de la cassette (13, 34).

2. Cassette d'isolation selon la revendication 1, **caractérisée en ce que** les éléments de réflexion plats sont des films métalliques (21, 22), de préférence constitués d'acier inoxydable, d'acier VA, plus particulièrement d'acier austénitique.

3. Cassette d'isolation selon la revendication 1 ou 2, **caractérisée en ce que** les éléments de réflexion plats (21, 22) sont disposés de manière concentrique, plus particulièrement avec une distance radiale (26) de 4 à 15 mm, de préférence de 6 à 10 mm.

4. Cassette d'isolation selon l'une des revendications précédentes, **caractérisée en ce que** les éléments de réflexion plats (21) comprennent des entretoises, de préférence des picots (23) qui sont réalisés, de préférence, des deux côtés des éléments de réflexion (21), de préférence au moyen d'une déformation contrôlée des éléments de réflexion (21).

5. Cassette d'isolation selon la revendication 4, **caractérisée en ce que** des éléments de réflexion (21) avec entretoises (23) et des éléments de réflexion (22) sans entretoises (23) sont disposés en alternance.

6. Cassette d'isolation selon l'une des revendications précédentes, **caractérisée en ce qu'**une enveloppe externe est prévue, comprenant plusieurs parties d'enveloppe (15-18, 36-39), de préférence des parties d'enveloppe (15-18, 36-39) adjacentes entre elles de manière axiale et/ou tangentielle pouvant coulisser de manière axiale et/ou tangentielle entre elles grâce au guidage coulissant (20).

7. Cassette d'isolation selon la revendication 6, **caractérisée en ce que** les parties d'enveloppe (15-18, 36-39) possèdent des fermetures rapides, plus particulièrement des fermetures à serrage (19), pour relier les parties d'enveloppe (15-18, 36-39) entre elles et/ou avec des cassettes d'isolation (12) adjacentes entre elles de manière axiale et/ou tangentielle.

8. Cassette d'isolation selon l'une des revendications précédentes, **caractérisée en ce que** la deuxième partie de la cassette comprend un logement (40, 41) pour un embranchement d'un système de canalisation.

9. Cassette d'isolation selon l'une des revendications précédentes, **caractérisée en ce que** la première partie de la cassette (13, 34) et/ou la deuxième partie de la cassette (14, 35) comprend, au niveau de son enveloppe externe (42), un porte-à-faux (43) et/ou un pli (31) pour le guidage de l'autre partie de la cassette

10. Cassette d'isolation selon la revendication 9, **caractérisée en ce que** le porte-à-faux (43) et/ou le pli (31) présente une hauteur qui correspond approximativement à la moitié de la longueur de guidage du guidage coulissant (20), plus particulièrement légèrement supérieure.

11. Utilisation d'une cassette d'isolation (11, 33) selon l'une des revendications précédentes en tant qu'élément de compensation pour compenser les changements de longueur thermiques et/ou en tant que partie d'ajustement pour l'adaptation variable de la longueur lors du montage.

12. Utilisation d'une cassette d'isolation (11, 33) selon l'une des revendications 1 à 10, pour l'isolation de canalisations, plus particulièrement de tubes à eau de refroidissement de centrales énergétiques, de préférence au niveau d'embranchements.
